# EUROPÄISCHE PATENTSCHRIFT

(11) **EP 2 678 381 B1**
(45) Veröffentlichungstag und Bekanntmachung des Hinweises auf die Patenterteilung: **18.01.2017**
(21) Anmeldenummer: 12704429.5
(22) Anmeldetag: 20.02.2012
(51) Int. Cl.: C08J 9/28, C08G 18/32, C08G 18/76, C08G 101/00

(54) **VERFAHREN ZUR HERSTELLUNG VON PULVERFÖRMIGEN PORÖSEN MATERIALIEN**
METHOD FOR PRODUCING POROUS POWDER MATERIALS
PROCÉDÉ DE FABRICATION DE MATÉRIAUX POREUX SOUS FORME DE POUDRE

(30) Priorität: 24.02.2011 EP 11155833
(43) Veröffentlichungstag der Anmeldung: 01.01.2014
(73) Patentinhaber: BASF SE, 67056 Ludwigshafen am Rhein (DE)
(72) Erfinder: FRICKE, Marc, 49090 Osnabrück (DE); ELBING, Mark, 28215 Bremen (DE)
(86) Internationale Anmeldenummer: PCT/EP2012/052875
(87) Internationale Veröffentlichungsnummer: WO 2012/113759

(56) Entgegenhaltungen:
- WO-A2-2011/000771
- US-A- 5 484 818

## Beschreibung

Die vorliegende Erfindung betrifft ein Verfahren zur Herstellung von pulverförmigen organischen porösen Materialien umfassend (i) das Bereitstellen eines organischen Xerogels oder organischen Aerogels, welches auf Basis von Polyharnstoff und/oder Polyisocyanurat aufgebaut ist, und anschließend (ii) das Zerkleinern des in Schritt (i) bereitgestellten Materials.

Weiterhin betrifft die Erfindung die so erhältlichen pulverförmigen organischen porösen Materialien, Wärmedämmstoffe enthaltend die pulverförmigen porösen organischen Materialien, Baumaterial und Vakuumisolationspaneele enthaltend die Wärmedämmstoffe sowie die Verwendung der pulverförmigen organischen porösen Materialien oder der Wärmedämmstoffe zur Wärmedämmung.

Die Wärmedämmung zur Einsparung von Energie hat einen hohen Stellenwert. Der Wärmedämmung kommt vor dem Hintergrund steigender Energiepreise und dem Streben nach einer Reduzierung des CO₂-Ausstosses sowie auch zukünftig noch steigenden Anforderungen an den Wärme- und Kälteschutz eine immer höhere Bedeutung zu. Diese steigenden Anforderungen an eine Optimierung des Wärmedämmschutzes umfassen sowohl Gebäude, und zwar sowohl Neubauten als auch Bauten im Bestand, als auch Kälteisolierungen im mobilen, logistischen und im stationären Bereich.

Baustoffe wie Stahl, Beton, Ziegelwerk und Glas, aber auch Natursteine sind relativ gute Wärmeleiter, so dass die daraus errichteten Aussenwände von Gebäuden bei kalter Witterung sehr schnell die Wärme von der Innenseite an die Aussenseite abgeben.

Die Entwicklung geht daher zum einen zur Verbesserung der Isolationseigenschaften durch Steigerung der Porosität dieser Baustoffmaterialien, wie z. B. bei Beton und Ziegelwerk, und zum anderen zur Verkleidung der Aussenwände mit Wärmedämmstoffmaterialien. Die bislang kommerziell verwendeten Systeme weisen jedoch immer noch verbesserungsbedürftige Wärmedämmeigenschaften auf.

Sehr gute Isolierwirkung zeichnen sogenannte Vakuumisolationspaneele, kurz VIP genannt, aus. Mit einer Wärmleitfähigkeit von etwa 0,004 bis 0,008 W/mK (je nach Kernmaterial und Unterdruck), weisen die Vakuumisolationspaneele eine 8 bis 25 mal bessere Wärmdämmwirkung wie konventionelle Wärmedämmsysteme aus. Sie ermöglichen daher schlanke Konstruktionen mit optimaler Wärmdämmung die sowohl im Baubereich als auch im Haushaltsgeräte-, Kühl- und Logistikbereich eingesetzt werden können.

Vakuumisolationspaneele auf Basis poröser Wärmedämmstoffe, Polyurethanschaumplatten und gepressten Fasern als Kernmaterial mit Verbundfolien (z. B. Aluminiumverbundfolien bzw. sog. Metallisierten) sind allgemein bekannt und hinlänglich beschrieben.

Diese VIP-Technologie weist aber einige gravierende Nachteile auf. Wenn diese evakuierten Paneele durch Beschädigungen belüftet werden, so bedeutet dies das Ende der sehr guten Wärmedämmung. Die Isolierwirkung entspricht dann nur mehr der der eingesetzten Kernmaterialien. Die Lebensdauer ist durch die Diffusion von Umgebungsgasen durch die Barriere bzw. Hülle in die Vakuumpaneele, zeitlich begrenzt.

Ein weiterer Nachteil heutiger Vakuumisolationspaneele ist die fehlende Kombination aus geringer Wärmeleitfähigkeit bei moderaten Drücken und bei geringen Dichten um 100 g/L.

Dementsprechend besteht das Bedürfnis, Materialien aufzufinden, die auch bei einem Druck oberhalb des Vakuumbereichs und insbesondere bei Normaldruck günstige Wärmeleiteigenschaften aufweisen, und zwar bei gleichzeitig geringen Dichten.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmeisolatoren.

Solche porösen Materialien mit kleinem mittlerem Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Organische poröse Materialien in Form von Xerogelen oder Aerogelen sind dem Fachmann an sich bekannt.

Aus der WO-2008/138978 sind Xerogele enthaltend von 30 bis 90 Gew.-% mindestens eines mehrfunktionellen Isocyanats und von 10 bis 70 Gew.-% mindestens eines mehrfunktionellen aromatischen Amins bekannt, deren volumengewichteter mittlerer Porendurchmesser höchstens 5 Mikrometer beträgt.

In der US 5,484,818 werden organische Aerogele offenbart, die aus Polyisocyanaten hergestellt werden und einen Porendurchmesser von höchstens 100 nm aufweisen. Die organischen Aerogele basieren auf Polyurethan, Polyharnstoff, Polyisocyanurat, Polyurethan/Polyisocyanurat, Polyallophanat, Polybidentat oder Polybiuret.

Die WO 2011/000771 beschreibt Xerogele enthaltend mindestens ein mehrfunktionelles Isocyanat, mindestens ein mehrfunktionelles aromatisches Amin und mindestens ein Polyalkylenpolyamin.

Organische Aerogele und Xerogele sind häufig spröde, was bei der Weiterverwendung als Gelkörper nachteilig ist. Andererseits spricht die kostengünstige Herstellung, die vielseitig einstellbaren Rezepturen und Eigenschaften sowie die guten Wärmedämmeigenschaften für diese Materialien. Ein ausgeprägter Vorteil der organischen Materialien ist die geringe Dichte.

Die Möglichkeit der Weiterverarbeitung von spröden porösen Materialien zu einem leicht zu verarbeitenden porösen Material mit guten Wärmedämmeigenschaften stellt somit eine große Erweiterung der toolbox eines Fachmanns auf dem Gebiet der Wärmedämmung dar. Aufgrund der Sprödigkeit lassen sich die organischen Aerogele und Xerogele besonders gut zerkleinern bzw. mahlen. Dadurch ist ein hoher Durchsatz beim Mahlschritt gewährleistet.

Bei der späteren Anwendung sind die Rieselfähigkeit und die niedrige Dichte des polymeren Materials sowohl in der Schüttung als auch im kompaktierten Zustand ein großer Vorteil.

Pulverschüttungen für Dämmanwendungen wie z. B. Einblasdämmung sind dem Fachmann ebenfalls bekannt. Organische Materialien in Form von Schäumen konnten jedoch bislang nicht zu Pulver und/oder Schüttungen verarbeitet werden, ohne die günstigen Wärmedämmeigenschaften des zugrundeliegenden porösen Materials negativ zu beeinflussen. Bei den bekannten organischen porösen Materialien erfolgt nach Zerkleinerung eine völlige Zerstörung der Porenstruktur.

Auch bei bekannten anorganischen porösen Materialien lässt sich die Korngröße nicht in ausreichendem Maße frei wählen, was die Anwendbarkeit einschränkt. Beispielsweise fallen pyrogene Kieselsäuren als poröse Materialien in der Regel als Feinstaub an, so dass für viele Anwendungen eine Verpressung und/oder Verklebung erforderlich ist.

Es bestand daher die Aufgabe, die vorgenannten Nachteile zu vermeiden. Insbesondere sollte ein poröses organisches Material zur Verfügung gestellt werden, das die vorgenannten Nachteile nicht oder in geringerem Maße aufweist. Die porösen Materialien sollten gleichzeitig günstige Wärmeleitfähigkeit im Vakuum aufweisen. Darüber hinaus sollten die porösen Materialien auch bei Drücken oberhalb des Vakuumbereiches, insbesondere in einem Druckbereich von ungefähr 1 mbar bis ungefähr 100 mbar eine geringe thermische Leitfähigkeit aufweisen. Die Materialien sollten sich in einfacher Weise in Hohlräume einbringen lassen und eine geringe Dichte aufweisen. Die Materialien sollten in unterschiedlicher Partikelgröße herstellbar sein.

Demgemäß wurden das erfindungsgemäße Verfahren und die so erhältlichen porösen Materialien gefunden.

Bevorzugte Ausführungsformen sind den Ansprüchen und der Beschreibung zu entnehmen. Kombinationen bevorzugter Ausführungsformen verlassen den Rahmen dieser Erfindung nicht. Das erfindungsgemäße Verfahren zur Herstellung von pulverförmigen organischen porösen Materialien umfasst (i) das Bereitstellen eines organischen Xerogels oder organischen Aerogels und anschließend (ii) das Zerkleinern des in Schritt (i) bereitgestellten Materials, wobei das in Schritt (i) bereitgestellte organische poröse Material in einem Verfahren erhalten wird, welches folgende Schritte umfasst:
(a) Umsetzung von mindestens einem mehrfunktionellen Isocyanat (a1) und mindestens einem mehrfunktionellen aromatischen Amin (a2) in einem Lösungsmittel optional in Gegenwart von Wasser als Komponente (a3) und optional in Gegenwart mindestens eines Katalysators (a4);
(b) Entfernung des Lösungsmittels unter Erhalt des Aerogels oder Xerogels wobei das mindestens eine mehrfunktionelle aromatische Amin eine Struktur gemäß der allgemeinen Formel I aufweist, 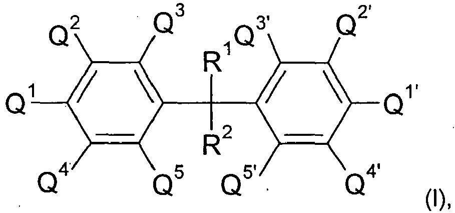
wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist.

Der Begriff "pulverförmig" wird synonym mit granularem Material verwendet und umfasst schütt- und/oder rieselfähiges Material. Ein pulverförmiges Material unterscheidet sich folglich von einem zusammenhängenden Material wie z. B. einem Gelkörper. Pulverförmiges Material umfasst insbesondere ein Material mit einer zahlengewichteten mittleren Partikelgröße von höchstens 5 mm, vorzugsweise höchstens 2 mm. Herstellungsbedingt beträgt die zahlengewichtete Zwar ist eine möglichst geringe Porengröße bei hoher Porosität aus Sicht einer geringen thermischen Leitfähigkeit wünschenswert. Herstellungsbedingt ergibt sich jedoch eine praktische untere Grenze des volumengewichteten mittleren Porendurchmessers. Im Allgemeinen beträgt der volumengewichtete mittlere Porendurchmesser mindestens 100 nm, vorzugsweise mindestens 150 nm. In vielen Fällen beträgt der volumengewichtete mittlere Porendurchmesser mindestens 200 nm, insbesondere mindestens 300 nm.

### Schritt (i)

Gemäß der vorliegenden Erfindung wird im Rahmen von Schritt (i) ein organisches Xerogel oder ein organisches Aerogel bereitgestellt, welches auf Basis von Polyharnstoff und/oder Polyisocyanurat aufgebaut ist. Im Rahmen der vorliegenden Erfindung bevorzugte organische Xerogele und Aerogele werden nachfolgend beschrieben.

"Auf Basis von Polyharnstoff aufgebaut" bedeutet, dass mindestens 50 mol-%, vorzugsweise mindestens 70 mol-%, insbesondere mindestens 90 mol-% der Verknüpfungen der Monomereinheiten im organischen Xerogel oder Aerogel als Harnstoffverknüpfungen vorliegen. "Auf Basis von Polyisocyanurat aufgebaut" bedeutet, dass mindestens 50 mol-%, vorzugsweise mindestens 70 mol-%, insbesondere mindestens 90 mol-% der Verknüpfungen der Monomereinheiten im organischen Xerogel oder Aerogel als Isocyanuratverknüpfungen vorliegen. "Auf Basis von Polyharnstoff und/oder Polyisocyanurat aufgebaut" bedeutet, dass mindestens 50 mol-%, vorzugsweise mindestens 70 mol-%, insbesondere mindestens 90 mol-% der Verknüpfungen der Monomereinheiten im organischen Xerogel oder Aerogel als Harnstoffverknüpfungen und/oder Isocyanuratverknüpfungen vorliegen.

In einer bevorzugten Ausführungsform wird in Schritt (i) das organische Aerogel oder Xerogel in Form eines Gelkörpers bereitgestellt und anschließend in Schritt (ii) zerkleinert.

Erfindungsgemäß wird das in Schritt (i) bereitgestellte organische poröse Material in einem Verfahren erhalten, welches folgende Schritte umfasst:
(a) Umsetzung von mindestens einem mehrfunktionellen Isocyanat (a1) und mindestens einem mehrfunktionellen aromatischen Amin (a2) in einem Lösungsmittel optional in Gegenwart von Wasser als Komponente (a3) und optional in Gegenwart mindestens eines Katalysators (a4);
(b) Entfernung des Lösungsmittels unter Erhalt des Aerogels oder Xerogels.

Die im Rahmen von Schritt (a) vorzugsweise verwendeten Komponenten (a1) bis (a4) und die Mengenverhältnisse werden nachfolgend erläutert.

Die mehrfunktionellen Isocyanate (a1) werden im Folgenden gemeinsam als Komponente (a1) bezeichnet. Entsprechend werden die mehrfunktionellen aromatischen Amine (a2) im Folgenden gemeinsam als Komponente (a2) bezeichnet. Es ist für den Fachmann offensichtlich, dass die genannten Monomerkomponenten im porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

### Komponente (a1)

Im erfindungsgemäßen Verfahren wird als Komponente (a1) mindestens ein mehrfunktionelles Isocyanat umgesetzt.

Im Rahmen des erfindungsgemäßen Verfahrens beträgt die eingesetzte Menge der Komponente (a1) vorzugsweise mindestens 20 Gew.-%, insbesondere mindestens 30 Gew.-%, besonders bevorzugt mindestens 40 Gew.-%, ganz besonders bevorzugt mindestens 55 Gew.-%, insbesondere mindestens 68 Gew.-%, jeweils bezogen auf das Gesamtgewicht der Komponenten (a1), (a2) und ggf. (a3), welches 100 Gew.-% ergibt. Im Rahmen des erfindungsgemäßen Verfahrens beträgt die eingesetzte Menge der Komponente (a1) außerdem vorzugsweise höchstens 99,8 Gew.-%, insbesondere höchstens 99,3 Gew.-%, besonders bevorzugt höchstens 97,5 Gew.-%, jeweils bezogen auf das Gesamtgewicht der Komponenten (a1), (a2) und ggf. (a3), welches 100 Gew.-% ergibt.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(iso-cyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Dies gilt insbesondere dann, wenn im Rahmen von Komponente (a2) Wasser verwendet wird.

Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das durch Phosgenierung des entsprechenden MDA entsteht.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,4. Die Funktionalität der Komponente (a1) beträgt bevorzugt von 2,2 bis 4 und besonders bevorzugt von 2,4 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,4 auf.

Die Viskosität der eingesetzten Komponente (a1) kann in einem weiten Bereich variieren. Vorzugsweise weist die Komponente (a1) eine Viskosität von 100 bis 3000 mPa.s, besonders bevorzugt von 200 bis 2500 mPa.s, auf.

### Komponente (a2)

Im Rahmen des erfindungsgemäß bevorzugten Verfahrens ist Komponente (a2) mindestens ein mehrfunktionelles aromatisches Amin gemäß Anspruch 1.

Komponente (a2) kann teilweise in situ erzeugt werden. In einer solchen Ausführungsform wird die Umsetzung im Rahmen von Schritt (a) in Gegenwart von Wasser (a3) durchgeführt. Wasser reagiert mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt.

In dieser bevorzugten Ausführungsform wird die Umsetzung in Gegenwart von Wasser (a3) und einem mehrfunktionellen aromatischen Amin als Komponente (a2) sowie optional in Gegenwart eines Katalysators (a4) durchgeführt.

In einer weiteren, ebenfalls bevorzugten Ausführungsform wird die Umsetzung von Komponente (a1) und einem mehrfunktionellen aromatischen Amin als Komponente (a2) optional in Gegenwart eines Katalysators (a4) durchgeführt. Dabei ist kein Wasser (a3) anwesend.

Mehrfunktionelle aromatische Amine sind dem Fachmann an sich bekannt. Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Die mehrfunktionellen aromatischen Amine sind vorzugsweise zweikernige aromatische Verbindungen mit zwei primären Aminogruppen (bifunktionelle aromatische Amine), entsprechende drei - oder mehrkernige aromatische Verbindungen mit mehr als zwei primären Aminogruppen oder Mischungen aus den vorgenannten Verbindungen. Bevorzugte mehrfunktionelle aromatische Amine der Komponente (a2) sind insbesondere Isomere und Derivate von Diaminodiphenylmethan.

Die genannten bifunktionellen zweikernigen aromatischen Amine sind erfindungsgemäß solche gemäß der allgemeinen Formel I, 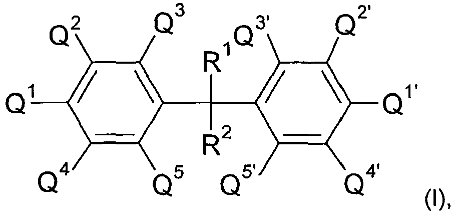 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist.

In einer Ausführungsform werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl. Derartige Verbindungen werden nachfolgende als substituierte aromatische Amine (a2-s) bezeichnet.

Bevorzugt sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R²=H.

Geeignete mehrfunktionelle aromatische Amine (a2) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

Ganz besonders bevorzugt umfasst Komponente (a2) mindestens ein mehrfunktionelles aromatisches Amin ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylen-verbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins der Komponente (a2), welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDA-basierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht.

Besonders bevorzugt enthält das mindestens eine mehrfunktionelle aromatische Amin Diaminodiphenylmethan oder ein Derivat von Diaminodiphenylmethan. Besonders bevorzugt enthält das mindestens eine mehrfunktionelle aromatische Amin oligomeres Diaminodiphenylmethan. Besonders bevorzugt ist, wenn die Komponente (a2) oligomeres Diaminodiphenylmethan als Verbindung (a2) enthält und insgesamt eine Funktionalität von mindestens 2,1 aufweist. Insbesondere enthält die Komponente (a2) oligomeres Diaminodiphenylmethan und weist eine Funktionalität von mindestens 2,4 auf.

Es ist im Rahmen der vorliegenden Erfindung möglich, die Reaktivität der primären Aminogruppen zu steuern, indem substituierte mehrfunktionelle aromatische Amine im Rahmen von Komponente (a2) verwendet werden. Die genannten und nachfolgend ausgeführten substituierten mehrfunktionellen aromatischen Amine, nachfolgend mit (a2-s) bezeichnet, können in Mischung mit den oben genannten (nicht substituierten) Diaminodiphenylmethanen (alle Q in Formel I Wasserstoff, sofern nicht NH₂) oder auch ausschließlich eingesetzt werden.

Die Substituenten Q², Q⁴, Q^{2'} und Q^{4'} werden im Rahmen der oben dargestellten Formel I einschließlich den dazugehörigen Definitionen erfindungsgemäß so gewählt, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist.

Die Substituenten Q², Q⁴, Q^{2'} und Q^{4'} werden erfindungsgemäß so gewählt, dass das substituierte aromatische Amin (a2-s) mindestens zwei primäre Aminogruppen umfasst, die jeweils eine oder zwei lineare oder verzweigte Alkylgruppen mit von 1 bis 12 Kohlenstoffatomen in α-Position aufweisen, die weitere funktionelle Gruppen tragen können. Sofern eines oder mehrere aus Q², Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogrupppen und/oder Hydroxygruppen und/oder Halogenatome als solche funktionelle Gruppen bevorzugt.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.

In einer besonders bevorzugten Ausführungsform umfasst Komponente (a2-s) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3'-5,5'-Tetraethyl-4,4'-diaminodiphenylmethan und/oder 3,3'-5,5'-Tetramethyl-4,4'-diaminodiphenylmethan.

Die vorgenannten mehrfunktionellen Amine der Komponente (a2) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse.

Wie oben erläutert, kann Wasser als Komponente (a3) teilweise das mehrfunktionelle aromatische Amin ersetzen, indem es mit einer dann vorab berechneten Menge an zusätzlichem mehrfunktionellen aromatischem Isocyanat der Komponente (a1) in situ zu einem entsprechenden mehrfunktionellen aromatischen Amin reagiert.

Sofern als Komponente (a3) Wasser verwendet wird, sind wie nachfolgend ausgeführt vorzugsweise bestimmte Randbedingungen einzuhalten.

Wie bereits oben ausgeführt, reagiert Wasser mit den Isocyanatgruppen zu Aminogruppen unter Freisetzung von CO₂- Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt. Die Erzeugung von Aminen als Zwischenprodukt führt zu porösen Materialien mit hoher mechanischer Stabilität und geringer Wärmeleitfähigkeit. Das gebildete CO₂ darf die Gelierung jedoch nicht so stark stören, dass die Struktur des resultierenden porösen Materials in unerwünschter Weise beeinflusst wird. Hieraus ergibt sich die oben ausgeführte bevorzugte Obergrenze für den Wassergehalt bezogen auf das Gesamtgewicht der Komponenten (a1) bis (a3), der vorzugsweise höchstens 30 Gew.-%, besonders bevorzugt höchstens 25 Gew.-%, insbesondere höchstens 20 Gew.-% beträgt. Ein Wassergehalt in diesem Bereich führt darüber hinaus zu dem Vorteil, dass etwaiges Restwasser nach erfolgter Gelierung nicht aufwendig durch Trocknung entfernt werden muss.

Sofern als Komponente (a3) Wasser eingesetzt wird, beträgt die bevorzugt eingesetzte Menge Wasser von 0,1 bis 30 Gew.-%, insbesondere von 0,2 bis 25 Gew.-%, besonders bevorzugt von 0,5 bis 20 Gew.-%, jeweils bezogen auf das Gesamtgewicht der Komponenten (a1) bis (a3), welches 100 Gew.-% ergibt.

Die bevorzugte Menge Wasser ist innerhalb der dargelegten Bereiche davon abhängig, ob ein Katalysator (a4) verwendet wird oder nicht.

In einer ersten Variante, welche die Verwendung von Wasser umfasst, erfolgt die Umsetzung der Komponenten (a1) bis (a3) ohne die Anwesenheit eines Katalysators (a4). In dieser ersten Ausführungsform hat es sich als vorteilhaft herausgestellt, von 5 bis 30 Gew.-%, insbesondere von 6 bis 25 Gew.-%, besonders bevorzugt von 8 bis 20 Gew.-% Wasser als Komponente (a3) jeweils bezogen auf das Gesamtgewicht der Komponenten (a1) bis (a3), welches 100 Gew.-% ergibt, einzusetzen.

Im Rahmen dieser ersten Ausführungsform werden die vorgenannten Komponenten (a1) bis (a3) vorzugsweise in folgendem Verhältnis eingesetzt, jeweils bezogen auf das Gesamtgewicht der Komponenten (a1) bis (a3), welches 100 Gew.-% ergibt: von 40 bis 94,9 Gew.-%, insbesondere von 55 bis 93,5 Gew.-%, besonders bevorzugt von 68 bis 90 Gew.-% der Komponente (a1), von 0,1 bis 30 Gew.-%, insbesondere von 0,5 bis 20 Gew.-%, besonders bevorzugt von 2 bis 12 Gew.-% mehrfunktionelle aromatische Amine (a2) und von 5 bis 30 Gew.-%, insbesondere von 6 bis 25, besonders bevorzugt von 8 bis 20 Gew.-% Wasser (a3).

Aus dem Wassergehalt und dem Gehalt reaktiver Isocyanatgruppen der Komponente (a1) ergibt sich ein rechnerischer Gehalt an Aminogruppen, indem man von einer vollständigen Umsetzung des Wassers mit den Isocyanatgruppen der Komponente (a1) unter Bildung einer entsprechenden Menge Aminogruppen ausgeht und diesen Gehalt zum Gehalt resultierend aus Komponente (a2) addiert (insgesamt n^{Amin}). Das hieraus resultierende Einsatzverhältnis der rechnerisch verbleibenden NCO-Gruppen n^{NCO} im Verhältnis zu den rechnerisch gebildeten sowie eingesetzten Aminogruppen wird nachfolgend als rechnerisches Einsatz-Verhältnis n^{NCO}/n^{Amin} bezeichnet und ist ein Äquivalenzverhältnis, d. h. ein molares Verhältnis der jeweiligen funktionellen Gruppen.

Im Rahmen der vorstehend genannten ersten Variante kann das rechnerische Einsatz-Verhältnis (Äquivalenzverhältnis) n^{NCO}/n^{Amin} über einen weiten Bereich variieren und insbesondere von 0,6 bis 5 betragen. n^{NCO}/n^{Amin} beträgt vorzugsweise von 1 bis 1,6, insbesondere von 1,1 bis 1,4.

In einer zweiten, bevorzugten Variante, welche die Verwendung von Wasser umfasst, erfolgt die Umsetzung der Komponenten (a1) bis (a3) in Anwesenheit eines Katalysators (a4). In dieser zweiten Ausführungsform hat es sich als vorteilhaft herausgestellt, von 0,1 bis 15 Gew.-%, insbesondere von 0,2 bis 15 Gew.-%, besonders bevorzugt von 0,5 bis 12 Gew.-% Wasser (a3), jeweils bezogen auf das Gesamtgewicht der Komponenten (a1) bis (a3), welches 100 Gew.-% ergibt, einzusetzen. In den vorgenannten Bereichen ergeben sich besonders günstige mechanische Eigenschaften der resultierenden porösen Materialien, was durch eine besonders günstige Netzwerkstruktur begründet ist. Eine höhere Menge an Wasser wirkt sich negativ auf die Netzwerkstruktur aus und ist in Bezug auf die Endeigenschaften des porösen Materials von Nachteil.

Im Rahmen der bevorzugten zweiten Variante werden die vorgenannten Komponenten (a1) bis (a3) vorzugsweise in folgendem Verhältnis eingesetzt, jeweils bezogen auf das Gesamtgewicht der Komponenten (a1) bis (a3), welches 100 Gew.-% ergibt: von 55 bis 99,8 Gew.-%, insbesondere von 65 bis 99, 3 Gew.-%, besonders bevorzugt von 76 bis 97,5 Gew.-% der Komponente (a1), von 0,1 bis 30 Gew.-%, insbesondere von 0,5 bis 20 Gew.-%, besonders bevorzugt von 2 bis 12 Gew.-% mehrfunktionelles aromatisches Amin (a2) und von 0,1 bis 15 Gew.-%, insbesondere von 0,2 bis 15, besonders bevorzugt von 0,5 bis 12 Gew.-% Wasser (a3). Gemäß der vorstehend genannten zweiten Variante beträgt das rechnerische Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a4) zu einer verbesserten Netzwerkstruktur und zu verbesserten Endeigenschaften des resultierenden porösen Materials.

In der bereits oben erläuterten zweiten bevorzugten Ausführungsform erfolgt die Umsetzung gemäß Schritt (a) in Abwesenheit von Wasser (a3). Im Rahmen dieser bevorzugten Ausführungsform werden die oben ausgeführten Komponenten (a1) und (a2) vorzugsweise in folgendem Verhältnis eingesetzt, jeweils bezogen auf das Gesamtgewicht der Komponenten (a1) und (a2), welches 100 Gew.-% ergibt: von 20 bis 80 Gew.-%, insbesondere von 25 bis 75 Gew.-%, besonders bevorzugt von 35 bis 68 Gew.-% der Komponente (a1), von 20 bis 80 Gew.-%, insbesondere von 25 bis 75 Gew.-%, besonders bevorzugt von 32 bis 65 Gew.-% Komponente (a2); kein (a3).

Im Rahmen dieser vorstehend ausgeführten Ausführungsform beträgt das Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt auch in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a4) zu einer verbesserten Netzwerkstruktur und zu verbesserten Endeigenschaften des resultierenden porösen Materials.

Die Komponenten (a1) bis (a3) werden nachfolgend gemeinsam als organische Gelvorstufe (A) bezeichnet.

### Katalysator (a4)

In einer ersten bevorzugten Ausführungsform wird das erfindungsgemäße Verfahren vorzugsweise in Gegenwart mindestens eines Katalysators als Komponente (a4) durchgeführt.

Als Katalysatoren kommen im Prinzip alle dem Fachmann bekannten Katalysatoren in Betracht, welche die Trimerisierung von Isocyanaten (sogenannte Trimerisierungskatalysatoren) und/oder die Umsetzung von Isocyanaten mit Aminogruppen (sogenannte Gelkatalysatoren) und/odersofern Wasser verwendet wird - die Umsetzung von Isocyanaten mit Wasser (sogenannte Treibkatalysatoren) beschleunigen.

Die entsprechenden Katalysatoren sind an sich bekannt und weisen unterschiedliche Ausprägungen hinsichtlich der oben genannten drei Reaktionen auf. Je nach Ausprägung können sie somit ein oder mehrerer der vorgenannten Typen zugeordnet werden. Dem Fachmann ist darüber hinaus bekannt, dass auch andere Reaktionen als die oben genannten auftreten können.

Entsprechende Katalysatoren lassen sich unter anderem anhand ihres Gel- zu TreibVerhältnisses charakterisieren, wie z.B. bekannt aus Polyurethane, 3. Auflage, G. Oertel, Hanser Verlag, München, 1993, Seiten 104 bis 110.

Sofern keine Komponente (a3), d. h. kein Wasser verwendet wird, weisen bevorzugte Katalysatoren eine signifikante Aktivität hinsichtlich der Trimerisierung auf. Hierdurch wird die Homogenität der Netzwerkstruktur günstig beeinflusst, woraus besonders günstige mechanische Eigenschaften resultieren

Sofern Wasser als Komponente (a3) verwendet wird, weisen bevorzugte Katalysatoren (a4) ein ausgewogenes Gel- zu Treibverhältnis auf, so dass die Reaktion der Komponente (a1) mit Wasser nicht zu stark beschleunigt wird und zu einer negativen Beeinflussung der Netzwerkstruktur führt und gleichzeitig eine kurze Gelierungszeit resultiert, so dass die Entformungszeit vorteilhaft gering ist. Bevorzugte Katalysatoren weisen gleichzeitig eine signifikante Aktivität hinsichtlich der Trimerisierung auf. Hierdurch wird die Homogenität der Netzwerkstruktur günstig beeinflusst, woraus besonders günstige mechanische Eigenschaften resultieren.

Die Katalysatoren können ein Monomerbaustein (einbaubarer Katalysator) oder nicht-einbaubar sein.

Die Komponente (a4) wird zweckmäßigerweise in der geringsten wirksamen Menge eingesetzt. Vorzugsweise Anwendung finden Mengen von 0,01 bis 5 Gew.-teile, insbesondere von 0,1 bis 3 Gew.- teile, besonders bevorzugt von 0,2 bis 2,5 Gew.- teile der Komponente (a4) bezogen auf insgesamt 100 Gew.-teile der Komponenten (a1), (a2) und (a3).

Im Rahmen von Komponente (a4) bevorzugte Katalysatoren werden ausgewählt aus der Gruppe bestehend aus primären, sekundären und tertiären Aminen, Triazinderivaten, Organometallverbindungen, Metallchelaten, quaternäre Ammoniumsalzen, Ammoniumhydroxiden sowie Alkali- und Erdalkali-Hydroxiden, -alkoxiden und -carboxylaten.

Geeignete Katalysatoren sind insbesondere starke Basen, beispielsweise quaternäre Ammoniumhydroxide, wie z. B. Tetraalkylammoniumhydroxide mit 1 bis 4 C-Atomen im Alkylrest und Benzyltrimethylammoniumhydroxid, Alkalimetallhydroxide, wie z. B. Kalium- oder Natriumhydroxid und Alkalimetallalkoxide, wie z. B. Natriummethylat, Kalium- und Natriumethylat und Kaliumisopropylat.

Geeignete Katalysatoren sind außerdem insbesondere Alkalimetallsalze von Carbonsäuren, wie z. B. Kaliumformiat, Natrium-, Kaliumacetat, Kalium-2-ethylhexanoat, Kaliumadipat und Natriumbenzoat, Alkalisalze von langkettigen Fettsäuren mit 8 bis 20, insbesondere 10 bis 20 C-Atomen und gegebenenfalls seitenständigen OH-Gruppen.

Geeignete Katalysatoren sind außerdem insbesondere N-Hydroxyalkyl-quarternärammoniumcarboxylate, wie z.B. Trimethylhydroxypropylammoniumformiat.

Organometallverbindungen sind dem Fachmann insbesondere als Gelkatalysatoren an sich bekannt und sind als Katalysatoren (a4) ebenfalls geeignet. Organozinnverbindungen wie z.B. Zinn-2-ethylhexanoate und Dibutylzinndilaurate sind im Rahmen von Komponente (a4) bevorzugt.

Tertiäre Amine sind dem Fachmann als Gelkatalysatoren und als Trimerisierungskatalysatoren an sich bekannt. Tertiäre Amine sind als Katalysatoren (a4) besonders bevorzugt. Bevorzugte tertiäre Amine sind insbesondere N,N-Dimethylbenzylamin, N,N'-Dimethylpiperazin, N,N-Dimethylcyclohexylamin, N,N',N"-Tris-(dialkylaminoalkyl)-s-hexahydrotriazine, wie z. B. N,N',N"-Tris(dimethylaminopropyl)-s-hexahydrotriazin, Tris-(dimethylaminomethyl)phenol, Bis(2-dimethylaminoethyl)ether, N,N,N,N,N-Pentamethyldiethylentriamin, Methylimidazol, Dimethylimidazol, Dimethylbenzylamin, 1,6-Diazabicyclo-5,4,0-undecen-7, Triethylamin, Triethylendiamin (IUPAC: 1,4-Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin und Diisopropanolamin.

Im Rahmen von Komponente (a4) besonders bevorzugte Katalysatoren werden ausgewählt aus der Gruppe bestehend aus N,N-Dimethylcyclohexylamin, Bis(2-dimethylaminoethyl)ether, N,N,N,N,N-Pentamethyldiethylentriamin, Methylimidazol, Dimethylimidazol, Dimethylbenzylamin, 1,6-Diazabicyclo-5,4,0-undecen-7, Tris-dimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Metall-Acetylacetonate, Ammonium-Ethylhexanoate und Metallionen-Ethylhexanoate.

Die Verwendung der im Rahmen der vorliegenden Erfindung bevorzugten Katalysatoren (a4) führt zu porösen Materialien mit verbesserten mechanischen Eigenschaften, insbesonders zu verbesserter Druckfestigkeit. Darüber hinaus wird durch Verwendung der Katalysatoren (a4) die Gelierungszeit verringert, d. h. die Gelierungsreaktion beschleunigt, ohne andere Eigenschaften negativ zu beeinflussen.

### Lösungsmittel

Gemäß der vorliegenden Erfindung findet die Umsetzung in Gegenwart eines Lösungsmittels statt.

Der Begriff Lösungsmittel umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel ist eine unter den Bedingungen des Schrittes (a) flüssige Verbindung, vorzugsweise ein organisches Lösungsmittel.

Als Lösungsmittel kommen prinzipiell eine organische Verbindung oder ein Gemisch aus mehreren Verbindungen in Betracht, wobei das Lösungsmittel bei den Temperatur- und Druckbedingungen, unter denen die Mischung bereitgestellt wird (kurz: Lösungsbedingungen), flüssig ist. Die Zusammensetzung des Lösungsmittels wird so gewählt, dass es in der Lage ist, die organische Gelvorstufe zu lösen oder zu dispergieren, bevorzugt zu lösen. Bevorzugte Lösungsmittel sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt der Umsetzung in Gegenwart des Lösungsmittels ist zunächst ein Gel, d. h. ein viskoelastisches chemisches Netzwerk, das durch das Lösungsmittel gequollen ist. Ein Lösungsmittel, welches ein gutes Quellmittel für das gebildete Netzwerk darstellt, führt in der Regel zu einem Netzwerk mit feinen Poren und kleinem mittleren Porendurchmesser, wohingegen ein Lösungsmittel, welches ein schlechtes Quellmittel für das resultierende Gel darstellt, in der Regel zu einem grobporigen Netzwerk mit großem mittleren Porendurchmesser führt.

Die Wahl des Lösungsmittels beeinflusst somit die angestrebte Porengrößenverteilung und die angestrebte Porosität. Die Wahl des Lösungsmittels erfolgt im Allgemeinen zudem so, dass ein Ausfällen oder Ausflocken durch Bildung eines präzipitierten Reaktionsproduktes während oder nach Schritt (a) des erfindungsgemäßen Verfahrens weitestgehend nicht auftritt.

Bei Wahl eines geeigneten Lösungsmittels ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel kann gravimetrisch bestimmt werden, indem die Reaktionsmischung vor dem Gelpunkt über ein geeignetes Filter filtriert wird.

Als Lösungsmittel kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1), (a2) und ggf. (a3) sind, d. h. solche, die die Bestandteile der Komponenten (a1), (a2) und ggf. (a3) unter Reaktionsbedingungen weitgehend vollständig lösen. Bevorzugt ist das Lösungsmittel gegenüber Komponente (a1) inert, d. h. nicht reaktiv.

Als Lösungsmittel kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel in Betracht.

Dialkylether und zyklische Ether sind als Lösungsmittel ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Als Lösungsmittel sind außerdem Alkylalkanoate bevorzugt, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

Aldehyde und/oder Ketone sind als Lösungsmittel bevorzugt. Als Lösungsmittel geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel besonders bevorzugt. Ganz besonders bevorzugt sind Ketone der allgemeinen Formel R¹(CO)R², wobei R¹ und R² unabhängig voneinander ausgewählt werden aus Alkylgruppen mit 1 bis 3 C-Atomen. In einer ersten bevorzugten Ausführungsform ist das Keton Aceton. In einer weiteren bevorzugten Ausführungsform umfasst mindestens einer der beiden Substituenten R¹ und/oder R² eine Alkylgruppe mit mindestens 2 Kohlenstoffatomen, insbesondere Methylethylketon. Durch Verwendung der vorgenannten besonders bevorzugten Ketone in Kombination mit dem erfindungsgemäßen Verfahren werden poröse Materialien mit besonders kleinem mittlerem Porendurchmesser erhalten. Ohne sich beschränken zu wollen besteht die Vorstellung, dass die Porenstruktur des entstehenden Gels aufgrund der höheren Affinität der vorgenannten besonders bevorzugten Ketone besonders feinporig ist.

In vielen Fällen ergeben sich besonders geeignete Lösungsmittel, indem man zwei oder mehrere miteinander vollständig mischbare Verbindungen, ausgewählt aus den vorgenannten Lösungsmitteln, in Form eines Gemisches einsetzt.

Um in Schritt (a) ein ausreichend stabiles Gel zu erhalten, das bei der Trocknung in Schritt (b) nicht stark schrumpft, darf der Anteil der Komponenten (a1) bis (a3) am Gesamtgewicht der Komponenten (a1) bis (a3) und dem Lösungsmittel, welches 100 Gew.-% ergibt, im Allgemeinen nicht weniger als 5 Gew.-% betragen. Bevorzugt beträgt der Anteil der Komponenten (a1) bis (a3) am Gesamtgewicht der Komponenten (a1) bis (a3) und dem Lösungsmittel, welches 100 Gew.-% ergibt, mindestens 6 Gew.-%, besonders bevorzugt mindestens 8 Gew.-%, insbesondere mindestens 10 Gew.-%.

Andererseits darf die Konzentration der Komponenten (a1) bis (a3) in der bereitgestellten Mischung nicht zu hoch gewählt werden, da ansonsten kein poröses Material mit günstigen Eigenschaften erhalten wird. Im Allgemeinen beträgt der Anteil der Komponenten (a1) bis (a3) am Gesamtgewicht der Komponenten (a1) bis (a3) und dem Lösungsmittel, welches 100 Gew.-% ergibt, höchstens 40 Gew.-%. Bevorzugt beträgt der Anteil der Komponenten (a1) bis (a3) am Gesamtgewicht der Komponenten (a1) bis (a3) und dem Lösungsmittel, welches 100 Gew.-% ergibt, höchstens 35 Gew.-%, besonders bevorzugt höchstens 25 Gew.-%, insbesondere höchstens 20 Gew.-%.

Vorzugsweise beträgt der Gewichtsanteil der Komponenten (a1) bis (a3) am Gesamtgewicht der Komponenten (a1) bis (a3) und des Lösungsmittels, welches 100 Gew.-% ergibt, insgesamt von 8 bis 25 Gew.-%, insbesondere von 10 bis 20 Gew.-%, besonders bevorzugt von 12 bis 18 Gew.-%. Die Einhaltung der Menge der Einsatzstoffe im genannten Bereich führt zu porösen Materialien mit besonders günstiger Porenstruktur, geringer Wärmeleitfähigkeit und geringer Schrumpfung bei der Trocknung.

Vor der Umsetzung gemäß Schritt (a) des erfindungsgemäßen Verfahren erfolgt vorzugsweise das Bereitstellen der Komponenten (a1), (a2), ggf. (a3) und ggf. (a4) und des Lösungsmittels.

Vorzugsweise werden die Komponenten (a1) einerseits und (a2) sowie ggf. (a3) und ggf. (a4) andererseits getrennt voneinander jeweils in einer geeigneten Teilmenge des Lösungsmittels bereitgestellt. Die getrennte Bereitstellung ermöglicht die optimale Kontrolle beziehungsweise Steuerung der Gelierungsreaktion vor und während des Vermischens.

Sofern Wasser als Komponente (a3) eingesetzt wird, wird Komponente (a3) besonders bevorzugt getrennt von Komponente (a1) bereitgestellt. Dies vermeidet die Reaktion von Wasser mit Komponente (a1) unter Bildung von Netzwerken ohne Anwesenheit der Komponente (a2). Andernfalls führt die Vorabmischung von Wasser mit Komponente (a1) zu weniger günstigen Eigenschaften in Bezug auf die Homogenität der Porenstruktur und die Wärmeleitfähigkeit der resultieren Materialien.

Die vor Durchführung von Schritt (a) bereitgestellte Mischung oder Mischungen können außerdem übliche, dem Fachmann bekannte Hilfsmittel als weitere Bestandteile enthalten. Genannt seien beispielsweise oberflächenaktive Substanzen, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001, 104-127.

Um die Umsetzung gemäß Schritt (a) des bevorzugten Verfahrens durchzuführen, muss zunächst eine homogene Mischung vor der Umsetzung gemäß Schritt (a) bereitgestellten Komponenten erzeugt werden.

Das Bereitstellen der im Rahmen von Schritt (a) umgesetzten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen. Nach erfolgter Erzeugung einer homogenen Mischung wird die Mischapparatur vorzugsweise abgeschaltet.

Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (a) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Gelierung ist dem Fachmann an sich bekannt und wird beispielsweise in der WO-2009/027310 auf Seite 21, Zeile 19 bis Seite 23, Zeile 13 beschrieben.

Im Rahmen des bevorzugten Verfahrens wird im Rahmen von Schritt (b) das Lösungsmittel entfernt (Trocknung). Grundsätzlich kommt eine Trocknung unter überkritischen Bedingungen in Betracht, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren. Das aus der überkritischen Trocknung erhaltene Material wird als Aerogel bezeichnet.

Es ist allerdings angesichts der einfachen Verfahrensführung bevorzugt, die erhaltenen Gele durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit zu trocknen. Das aus der subkritischen Trocknung erhaltene Material wird als Xerogel bezeichnet.

Vorzugsweise erfolgt das Trocknen des erhaltenen Gels durch Überführung des Lösungsmittels in den gasförmigen Zustand bei einer Temperatur und einem Druck unterhalb der kritischen Temperatur und des kritischen Drucks des Lösungsmittels. Demzufolge erfolgt vorzugsweise das Trocknen durch Entfernung des Lösungsmittels, das bei der Umsetzung zugegen war, ohne vorherigen Austausch gegen ein weiteres Lösungsmittel.

Entsprechende Methoden sind dem Fachmann ebenfalls bekannt und werden in der WO-2009/027310 auf Seite 26, Zeile 22 bis Seite 28, Zeile 36 beschrieben.

Bei der subkritischen Trocknung ist die Schrumpfung des Gelkörpers besonders ausgeprägt. Es ist ein Vorteil der vorliegenden Erfindung, die Schrumpfung bei der Trocknung zu minimieren.

### Schritt (ii)

Gemäß Schritt (ii) der vorliegenden Erfindung wird das vorab bereitgestellte organische poröse Material zerkleinert.

Die Zerkleinerung kann in einer Stufe oder in mehreren Stufen, in letztgenanntem Fall in einer oder in mehreren unterschiedlichen Vorrichtungen erfolgen. Beispielsweise kann das eingesetzte Material zunächst einer Vorzerkleinerung und anschließend einer Nachzerkleinerung unterzogen werden. Eine Nachzerkleinerung kann vorteilhafterweise in einer Schneidmühle erfolgen. Als Vorrichtung zum Zerkleinern kommen insbesondere Schneckenzerkleinerer, Rotorscheren, Ein- und Mehrwellenzerkleinerer, Walzenmühlen, Feinmühlen, Feinmahlanlagen, Prallscheibenmühlen und Hammermühlen in Betracht.

Verfahren und Vorrichtungen zur Zerkleinerung von organischen Materialien sind dem Fachmann weitläufig bekannt. Der Fachmann wählt eine geeignete Vorrichtung in Abhängigkeit von der zu zerkleinernden Menge, dem erwünschten Durchsatz, der zu erzielenden Partikelgröße und der Sprödigkeit des eingesetzten Materials.

Für das Zerkleinern der erfindungsgemäß verwendeten organischen porösen Aerogele und Xerogele haben sich insbesondere Universalrotormühlen als geeignet erwiesen.

Das in Schritt (ii) erhaltene Material weist vorzugsweise eine zahlengewichtete mittlere Partikelgröße von höchstens 2000 Mikrometern auf, insbesondere höchstens 1500 Mikrometer. Gleichzeitig weist das in Schritt (ii) erhaltene Material vorzugsweise eine zahlengewichtete mittlere Partikelgröße von mindestens 50 Mikrometern auf, insbesondere höchstens 100 Mikrometer. Verfahren zur Bestimmung der Partikelgröße sind dem Fachmann bekannt.Beispielsweise kann die Partikelgröße durch Luftstrahlsiebung bestimmt werden.

### Verwendung

Weiterhin betrifft die Erfindung pulverförmiges organisches poröses Material erhältlich gemäß dem erfindungsgemäßen Verfahren.

Die erfindungsgemäßen pulverförmigen organischen porösen Materialien können als solche oder in Mischung mit weiteren funktionalen Komponenten als Wärmedämmstoffe eingesetzt werden. Ein erfindungsgemäßer Wärmedämmstoff ist demzufolge eine Abmischung enthaltend die erfindungsgemäßen pulverförmigen organischen porösen Materialien. Die Auswahl geeigneter funktionaler Komponenten als Zusatzstoffe hängt vom Anwendungsgebiet ab.

Die Erfindung betrifft außerdem Baumaterialien und Vakuumissolationspaneele enthaltend die pulverförmigen organischen porösen Materialien sowie die Verwendung der erfindungsgemäßen pulverförmigen organischen porösen Materialien zur Wärmedämmung. Vorzugsweise werden die erfindungsgemäß erhältlichen Materialien für Wärmedämmung insbesondere in Bauten, oder zur Kälteisolation insbesondere im mobilen, logistischen oder im stationären Bereich verwendet, zum Beispiel in Kühlgeräten oder für mobile Anwendungen.

Mögliche weitere Komponenten dieser Wärmedämmstoffe sind beispielsweise Verbindungen, die Wärmestrahlen im Infrarotbereich insbesondere im Wellenlängenbereich zwischen 3 und 10 µm absorbieren, streuen und reflektieren können. Sie werden allgemein als Infrarot-Trübungsmittel bezeichnet. Die Partikelgrösse dieser Teilchen beträgt vorzugsweise von 0,5 bis 15 Mikrometer. Beispiele für derartige Substanzen sind insbesondere Titanoxide, Zirkonoxide, Ilmenite, Eisentitanate, Eisenoxide, Zirkonsilikate, Siliciumcarbid, Manganoxide, Graphite und Russ.

Zur mechanischen Verstärkung können Fasern als Zusatzstoffe eingesetzt werden. Diese Fasern können anorganischen oder organischen Ursprungs sein. Beispiele für anorganische Fasern sind vorzugsweise Glaswolle, Steinwolle, Basalt-Fasern, Schlacken-Wolle, keramische Fasern, die aus Schmelzen von Aluminium und/oder Siliciumdioxid sowie weiteren anorganischen Metalloxiden bestehen, und reine Siliciumdioxidfasern wie z. B. Silica-Fasern. Organische Fasern sind vorzugsweise z. B. Cellulosefasern, Textilfasern oder Kunststofffasern. Zum Einsatz kommen folgende Dimensionen: Durchmesser vorzugsweise 1-12 Mikrometer, insbesondere 6-9 Mikrometer; Länge vorzugsweise 1-25 mm, insbesondere 3-10 mm.

Aus technischen und wirtschaftlichen Gründen können der Mischung anorganische Füllmaterialien zugesetzt werden. Zum Einsatz kommen vorzugsweise verschiedene, synthetisch hergestellte Modifikationen von Siliciumdioxid wie z. B. gefällte Kieselsäuren, Lichtbogenkieselsäuren, SiO₂-haltige Flugstäube, die durch Oxidationen von flüchtigem Siliciummonoxid, bei der elektrochemischen Herstellung von Silicium oder Ferrosilicium entstehen. Ebenso Kieselsäuren, die durch Auslaugen von Silikaten wie Calziumsilikat, Magnesiumsilikat und Mischsilikaten wie z. B. Olivin (Magnesium-Eisensilicat) mit Säuren hergestellt werden. Ferner kommen zum Einsatz natürlich vorkommende SiO₂-haltige Verbindungen wie Diatomeenerden und Kieselguren. Ebenfalls können zur Anwendung kommen: thermisch aufgeblähte Mineralien wie vorzugsweise Perlite und Vermiculite. Je nach Bedarf können vorzugsweise feinteilige Metalloxide wie vorzugsweise Aluminiumoxid, Titandioxid, Eisenoxid zugesetzt werden.

Die Abmischung der erfindungsgemäßen Wärmedämmstoffe kann generell in diversen Mischaggregaten stattfinden. Bevorzugt kommen jedoch Planetenmischer zur Anwendung. Hierbei ist es vorteilhaft, die Fasern zuerst mit einem Teil der zweiten Mischkomponenten als eine Art Masterbatch vorzumischen, um damit ein vollständiges Aufschließen der Fasern zu gewährleisten. Nach dem Faseraufschluss erfolgt die Zugabe des größten Teils der Mischkomponenten.

Nach Beendigung des Mischprozesses kann das Schüttgewicht der Mischung je nach Art und Menge der Komponenten zwischen vorzugsweise 40-180 g/l, bevorzugt 40-90 g/l, betragen. Die Rieselfähigkeit der resultierenden porösen Mischung ist sehr gut, so dass sie problemlos und homogen zu Platten verpresst und auch in die Hohlräume von Hohlbausteinen eingefüllt und verpresst werden kann. Beim Verpressen zu Platten, kann durch Festlegung auf bestimmte Plattenstärken, über das Gewicht, die Dichte und infolge dessen auch die Wärmeleitzahl des Dämmstoffes wesentlich beeinflusst werden. Je geringer die Dichte der Platten ist, um so geringer ist die Wärmeleitzahl, und um so besser sind die Wärmedämmeigenschaften.

Die in Wärmedämmstoffen verwendeten erfindungsgemäßen Materialien kommen vorzugsweise in folgenden Anwendungsgebieten zum Einsatz: als Dämmung in Bauhohlsteinen, als Kerndämmung bei mehrschaligen Bausteinen, als Kerndämmung für Vakuumisolationsplatten (VIP), als Kerndämmung für Wärmedämmverbundsysteme (WDVS), und als Dämmung bei zweischaligen Mauerwerken, insbesondere im Rahmen der Einblasdämmung.

Ein weiterer Gegenstand der Erfindung sind Formkörper, Bausteine, Bausysteme und Bauverbundsysteme, die die erfindungsgemässen Wärmedämmstoffe enthält, wobei diese Formkörper, Bausteine, Bausysteme und Bauverbundsysteme teilweise oder vollständig aus den Wärmedämmstoffen bestehen. Ein weiterer Gegenstand der vorliegenden Erfindung sind Vakuumisolationspaneele, welche die erfindungsgemäßen Wärmedämmstoffe oder die erfindungsgemäßen pulverförmigen organischen porösen Materialien enthalten. Darüber hinaus eignen sich die erfindungsgemäßen Wärmedämmstoffe und die erfindungsgemäßen pulverförmigen organischen porösen Materialien insbesondere für Dämmung von extrudierten Hohlprofilen, insbesondere als Kernmaterial für die Dämmung in Fensterrahmen.

Die erfindungsgemäßen Wärmedämmstoffe und die erfindungsgemäßen pulverförmigen organischen porösen Materialien eignen sich außerdem insbesondere als Kernmaterialien für Vakuumisolationspaneele, die zur Wärmedämmung im Fahrzeugbau verwendet werden. Hierdurch können beispielsweise flächige Innenverkleidungsteile für den Fahrzeugbau hergestellt werden, die günstige Wärmedämmeigenschaften aufweisen. Es hat sich als besonders vorteilhaft herausgestellt, hierfür die erfindungsgemäßen pulverförmigen Materialien zu verwenden, da die entsprechenden Fahrzeugteile hohen Ansprüchen in Bezug auf eine komplexe Form beziehungsweise in Bezug auf einen komplexen Aufbau genügen müssen.

Ein Einsatz der oben beschriebenen porösen Wärmedämmstoffe findet erfindungsgemäss in Hohlbausteinen statt.

Hohlbausteine sind Bauelemente, die einen oder mehrere Hohlräume aufweisen. Sie können aus anorganischen, keramischen Materialien, wie gebranntem Tongut (Ziegel), Beton, Glas, Gips sowie Naturprodukten wie Naturstein, z. B. Kalksandstein bestehen. Vorzugsweise kommen Hohlbausteine aus Ziegel, Beton und Leichtbeton zur Anwendung. Ausführungsformen sind Wandbausteine, Bodenplatten, Deckenelemente und Vorbauelemente.

Es ist bekannt, dass die Hohlräume dieser Bauelemente mit porösem hohlraumstrukturierten Dämmmaterialien wie Styroporschaum oder Perlite-Schaum gefüllt sein können. Diese Bauelemente werden als Hohlbausteine mit integrierter Wärmedämmung bezeichnet.

Die Verwendung dieser Hohlbausteine mit integrierter Wärmedämmung soll im Mauerwerk eine besonders hohe Wärmedämmung und eine günstige Wasserdampfdurchlässigkeit sowie kaum Wasseraufnahme gewährleisten, zudem soll die Wärmespeicherung begünstigt werden.

Durch den erfindungsgemäßen Einsatz der beschriebenen porösen Wärmedämmstoffe in Hohlbausteinen, werden die Wärmedämmeigenschaften dieser Steine wesentlich verbessert und nachhaltig auf hohem Niveau gehalten.

Erfindungsgemäß können die entsprechenden Wärmedämmstoffe zu maßgenauen Platten verpresst und in die Kammern der Bauhohlsteine integriert werden,. Alternativ können maßgenaue Platten aus zuvor hergestellten Großplatten herausgeschnitten und in die Bausteine integriert werden.

Ebenfalls möglich ist eine Fixierung der Platten in den Hohlräume mittels vorzugsweise Polyurethanschaum oder anderer Haftschäume, bzw. Kleber. Desgleichen kann eine Umhüllung mit Vliesmaterialien, um z. B. eine mechanische Beeinflussungen und somit auch ein Ausstauben der Wärmedämmung zu verhindern, vorgenommen werden.

Um hierbei die Wirksamkeit der erreichbaren Wärmdämmungen im Verhältnis zur Wirtschaftlichkeit optimal zu nutzen, sind Kombinationen zwischen hocheffizienter poröser Wärmedämmung mit herkömmlichen Wärmedämmungssystemen mit geringeren Wärmedämmwirkungen möglich. Desgleichen können, je nach Einsatz und Dämmvermögen, einzelne oder mehrere Hohlkammern auch ohne Wärmedämmmaterialien versehen sein.

### Beispiele

Die Wärmeleitfähigkeit wurde mittels des dynamischen Hitzdraht-Verfahrens bestimmt. Beim Hitzdraht-Verfahren wird in die zu untersuchende Probe ein dünner Draht eingebettet, der gleichzeitig als Heizelement und Temperatursensor dient. Als Drahtmaterial wurde ein PlatinDraht mit einem Durchmesser von 100 Mikrometer und einer Länge von 40 mm eingesetzt, der zwischen zwei Hälften des jeweiligen Probenkörpers eingebettet wurde. Der Messaufbau aus Probe und Hitzdraht wurde in einen evakuierbaren Rezipienten präpariert, in dem nach dem Evakuieren der gewünschte Druck durch Belüften mit gasförmigem Stickstoff eingestellt wurde.

Es wurden folgende Verbindungen eingesetzt:
Komponente (a1): Oligomeres MDI (Lupranat® M50) mit einem NCO-Gehalt von 31,5 g pro 100 g nach ASTM D-5155-96 A, einer Funktionalität im Bereich von 2,8 bis 2,9 und einer Viskosität von 550 mPa.s bei 25°C nach DIN 53018 (nachfolgend "Verbindung M50").
Komponente (a2): 3,3',5,5'-Tetraethyl-4,4'-diaminodiphenylmethan (nachfolgend "MDEA")
Katalysator (a4): Triethanolamin

Als Ruß wurde Acetylene carbon black von ABCR mit einer Dichte von 200 g/L und einer spezifischen Oberfläche von 80 g/m², CAS Nr. 7440-44-0, eingesetzt.

### Beispiel 1

64 g der Verbindung M50 wurden unter Rühren bei 20°C in 210 g Aceton in einem Becherglas gelöst. 4 g der Verbindung MDEA, 2 g Triethanolamin und 8 g Wasser wurden in 210 g Aceton in einem zweiten Becherglas gelöst. Die beiden Lösungen wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt. Das getrocknete Gel wurde mittels Universalrotormühle zu einem Pulver mit einer Schüttdichte von 60 g/L gemahlen.

Die Wärmeleitfähigkeit des Pulvers mit einer Schüttdichte von 60 g/l betrug 5,7 mW/m*K bei einem Druck von 0,2 mbar und 29,5 mW/m*K bei einem Druck von 1000 mbar.

### Beispiel 2

Das so erhaltene Pulver wurde mit 2 Gew.-% Ruß vermischt. Die Wärmeleitfähigkeit des Pulvers enthaltend Ruß mit einer Schüttdichte von 60 g/l betrug 6,0 mW/m*K bei einem Druck von 0,7 mbar und 28 mW/m*K bei einem Druck von 1000 mbar.

## Patentansprüche

1. Verfahren zur Herstellung von pulverförmigen organischen porösen Materialien umfassend (i) das Bereitstellen eines organischen Xerogels oder organischen Aerogels und anschließend (ii) das Zerkleinern des in Schritt (i) bereitgestellten Materials, wobei das in Schritt (i) bereitgestellte organische poröse Material in einem Verfahren erhalten wird, welches folgende Schritte umfasst:
(a) Umsetzung von mindestens einem mehrfunktionellen Isocyanat (a1) und mindestens einem mehrfunktionellen aromatischen Amin (a2) in einem Lösungsmittel optional in Gegenwart von Wasser als Komponente (a3) und optional in Gegenwart mindestens eines Katalysators (a4);
(b) Entfernung des Lösungsmittels unter Erhalt des Aerogels oder Xerogels
wobei das mindestens eine mehrfunktionelle aromatische Amin eine Struktur gemäß der allgemeinen Formel I aufweist, 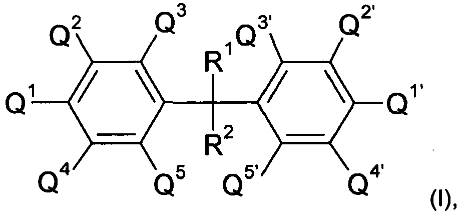 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und Q², Q⁴, Q^{2'} und Q⁴' so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist.

2. Verfahren nach Anspruch 1, wobei das organische Aerogel oder Xerogel in Form eines Gelkörpers bereitgestellt wird.

3. Verfahren nach Anspruch 1 oder 2, wobei das in Schritt (i) bereitgestellte organische Xerogel oder Aerogel eine volumengewichtete mittlere Porengröße von 100 nm bis 4 Mikrometer aufweist.

4. Verfahren nach einem oder mehreren der Ansprüche 1 bis 3, wobei die Zerkleinerung durch Mahlen in einer Mühle durchgeführt wird.

5. Verfahren nach einem oder mehreren der Ansprüche 1 bis 4, wobei das in Schritt (ii) erhaltene Material eine zahlengewichtete mittlere Partikelgröße von 50 bis 2000 Mikrometer aufweist.

6. Verfahren nach einem oder mehreren der Ansprüche 1 bis 5, wobei Komponente (a1) oligomeres Diphenylmethandiisocyanat enthält und eine Funktionalität von mindestens 2,4 aufweist.

7. Verfahren nach einem oder mehreren der Ansprüche 1 bis 6, wobei im Rahmen von Schritt (a) mindestens eine der folgenden Verbindungen in Mischung mit der Komponente (a2) eingesetzt wird: 4,4'-Diaminodiphenylmethan, 2,4'-Diaminodiphenylmethan, 2,2'-Diaminodiphenylmethan und oligomeres Diaminodiphenylmethan.

8. Verfahren nach einem oder mehreren der Ansprüche 1 bis 7, wobei die Umsetzung in Gegenwart eines Katalysators durchgeführt wird.

9. Verfahren nach einem oder mehreren der Ansprüche 1 bis 8, wobei die Umsetzung in Gegenwart von Wasser (a3) sowie optional in Gegenwart eines Katalysators (a4) durchgeführt wird.

10. Verfahren nach einem oder mehreren der Ansprüche 1 bis 9, wobei gemäß Schritt (a) die Umsetzung von Komponente (a1) und einem mehrfunktionellen aromatischen Amin als Komponente (a2) in Abwesenheit von Wasser (a3) durchgeführt wird.

11. Pulverförmiges organisches poröses Material erhältlich gemäß einem oder mehreren der Ansprüche 1 bis 10.

12. Wärmedämmstoff enthaltend ein pulverförmiges organisches poröses Material gemäß Anspruch 11.

13. Baumaterial enthaltend einen Wärmedämmstoff gemäß Anspruch 12.

14. Vakuumisolationspaneele enthaltend einen Wärmedämmstoff gemäß Anspruch 12.

15. Verwendung von pulverförmigen organischen porösen Materialien gemäß Anspruch 11 oder von Wärmedämmstoffen gemäß Anspruch 12 zur Wärmedämmung.

## Claims

1. A process for producing pulverulent organic porous materials, comprising (i) the provision of an organic xerogel or organic aerogel and then (ii) the comminution of the material provided in step (i), wherein the organic porous material provided in step (i) is obtained in a process which comprises the following steps:
(a) reaction of at least one polyfunctional isocyanate (a1) and at least one polyfunctional aromatic amine (a2) in a solvent, optionally in the presence of water as component (a3) and optionally in the presence of at least one catalyst (a4);
(b) removing the solvent to obtain the aerogel or xerogel,
wherein the at least one polyfunctional aromatic amine has a structure of the general formula I, 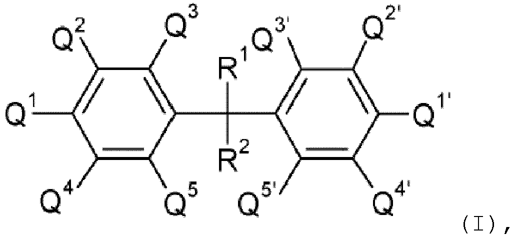 where R¹ and R² may be the same or different and are each independently selected from hydrogen and linear or branched alkyl groups having from 1 to 6 carbon atoms, and where all substituents Q¹ to Q⁵ and Q^{1'} to Q^{5'} are the same or different and are each independently selected from hydrogen, a primary amino group and a linear or branched alkyl group having from 1 to 12 carbon atoms, where the alkyl group may bear further functional groups provided that the compound of the general formula I comprises at least two primary amino groups, where at least one of Q¹, Q³ and Q⁵ is a primary amino group and at least one of Q^{1'}, Q^{3'} and Q^{5'} is a primary amino group and Q², Q⁴, Q^{2'} and Q^{4'} are selected such that the compound of the general formula I has at least one linear or branched alkyl group which may bear further functional groups and has 1 to 12 carbon atoms in the α position to at least one primary amino group bonded to the aromatic ring.

2. The process according to claim 1, wherein the organic aerogel or xerogel is provided in the form of a gel body.

3. The process according to claim 1 or 2, wherein the organic xerogel or aerogel provided in step (i) has a volume-weighted mean pore size of 100 nm to 4 micrometers.

4. The process according to one or more of claims 1 to 3, wherein the comminution is performed by grinding in a mill.

5. The process according to one or more of claims 1 to 4, wherein the material obtained in step (ii) has a number-weighted mean particle size of 50 to 2000 micrometers.

6. The process according to one or more of claims 1 to 5, wherein component (a1) comprises oligomeric diphenylmethane diisocyanate and has a functionality of at least 2.4.

7. The process according to one or more of claims 1 to 6, wherein at least one of the following compounds is used in step (a) in a mixture with the component (a2): 4,4'-diaminodiphenylmethane, 2,4'-diaminodiphenylmethane, 2,2'-diaminodiphenylmethane and oligomeric diaminodiphenylmethane.

8. The process according to one or more of claims 1 to 7, wherein the reaction is performed in the presence of a catalyst.

9. The process according to one or more of claims 1 to 8, wherein the reaction is performed in the presence of water (a3) and optionally in the presence of a catalyst (a4).

10. The process according to one or more of claims 1 to 9, wherein the reaction of component (a1) and a polyfunctional aromatic amine as component (a2) in step (a) is performed in the absence of water (a3).

11. A pulverulent organic porous material obtainable according to one or more of claims 1 to 10.

12. A thermal insulation material comprising a pulverulent organic porous material according to claim 11.

13. A building material comprising a thermal insulation material according to claim 12.

14. A vacuum insulation panel comprising a thermal insulation material according to claim 12.

15. The use of pulverulent organic porous materials according to claim 11 or of thermal insulation materials according to claim 12 for thermal insulation.

## Revendications

1. Procédé de fabrication de matériaux poreux organiques en poudre comprenant (i) la préparation d'un xérogel organique ou d'un aérogel organique, puis (ii) le broyage du matériau préparé à l'étape (i), le matériau poreux organique préparé à l'étape (i) étant obtenu par un procédé qui comprend les étapes suivantes :
(a) la mise en réaction d'au moins un isocyanate polyfonctionnel (a1) et d'au moins une amine aromatique polyfonctionnelle (a2) dans un solvant, éventuellement en présence d'eau en tant que composant (a3) et éventuellement en présence d'au moins un catalyseur (a4) ;
(b) l'élimination du solvant avec obtention de l'aérogel ou du xérogel, ladite au moins une amine aromatique polyfonctionnelle présentant une structure selon la formule générale I 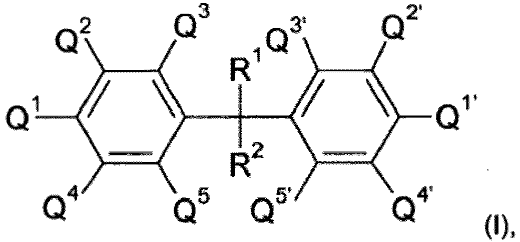
dans laquelle R¹ et R² peuvent être identiques ou différents, et sont choisis indépendamment l'un de l'autre parmi l'hydrogène et les groupes alkyle linéaires ou ramifiés de 1 à 6 atomes de carbone, tous les substituants Q¹ à Q⁵ et Q^{1'} à Q^{5'} étant identiques ou différents, et étant choisis indépendamment les uns des autres parmi l'hydrogène, un groupe amino primaire et un groupe alkyle linéaire ou ramifié de 1 à 12 atomes de carbone, le groupe alkyle pouvant porter des groupes fonctionnels supplémentaires, à condition que le composé selon la formule générale I comprenne au moins deux groupes amino primaires, au moins un substituant parmi Q¹, Q³ et Q⁵ étant un groupe amino primaire, et au moins un substituant parmi Q^{1'}, Q^{3'} et Q^{5'} étant un groupe amino primaire, et Q², Q⁴, Q^{2'} et Q^{4'} étant choisis de sorte que le composé selon la formule générale I comprenne au moins un groupe alkyle linéaire ou ramifié, qui peut porter des groupes fonctionnels supplémentaires, de 1 à 12 atomes de carbone, en position α par rapport à au moins un groupe amino primaire relié au noyau aromatique.

2. Procédé selon la revendication 1, dans lequel l'aérogel ou le xérogel organique est préparé sous la forme d'un corps en gel.

3. Procédé selon la revendication 1 ou 2, dans lequel le xérogel ou l'aérogel organique préparé à l'étape (i) présente une taille de pore moyenne pondérée en volume de 100 nm à 4 micromètres.

4. Procédé selon une ou plusieurs des revendications 1 à 3, dans lequel le broyage a lieu par concassage dans un moulin.

5. Procédé selon une ou plusieurs des revendications 1 à 4, dans lequel le matériau obtenu à l'étape (ii) présente une taille de particule moyenne pondérée en nombre de 50 à 2000 micromètres.

6. Procédé selon une ou plusieurs des revendications 1 à 5, dans lequel le composant (a1) contient du diisocyanate de diphénylméthane oligomère et présente une fonctionnalité d'au moins 2,4.

7. Procédé selon une ou plusieurs des revendications 1 à 6, dans lequel, dans le cadre de l'étape (a), au moins un des composés suivants est utilisé en mélange avec le composant (a2) : le 4,4'-diaminodiphénylméthane, le 2,4'-diaminodiphénylméthane, le 2,2'-diaminodiphénylméthane et le diaminodiphénylméthane oligomère.

8. Procédé selon une ou plusieurs des revendications 1 à 7, dans lequel la réaction est réalisée en présence d'un catalyseur.

9. Procédé selon une ou plusieurs des revendications 1 à 8, dans lequel la réaction est réalisée en présence d'eau (a3), ainsi qu'éventuellement en présence d'un catalyseur (a4).

10. Procédé selon une ou plusieurs des revendications 1 à 9, dans lequel, selon l'étape (a), la réaction du composant (a1) et d'une amine aromatique polyfonctionnelle en tant que composant (a2) est réalisée en l'absence d'eau (a3).

11. Matériau poreux organique en poudre pouvant être obtenu selon une ou plusieurs des revendications 1 à 10.

12. Isolant thermique contenant un matériau poreux organique en poudre selon la revendication 11.

13. Matériau de construction contenant un isolant thermique selon la revendication 12.

14. Panneaux d'isolation sous vide contenant un isolant thermique selon la revendication 12.

15. Utilisation de matériaux poreux organiques en poudre selon la revendication 11 ou d'isolants thermiques selon la revendication 12 pour l'isolation thermique.
